# EUROPÄISCHE PATENTANMELDUNG

(11) **EP 1 005 937 A2**
(43) Veröffentlichungstag der Anmeldung: **07.06.2000**
(21) Anmeldenummer: 99118482.1
(22) Anmeldetag: 17.09.1999
(51) Int. Cl.: B23D 47/04

(54) **Spannvorrichtung und Verfahren zum Spannen eines Werkstücks in einer Sägeeinrichtung**

(30) Priorität: 02.12.1998 DE 29821576 U
(71) Anmelder: RAPID MASCHINENBAU GmbH, 72131 Ofterdingen (DE)
(72) Erfinder: Letzgus,Gottfried, 72108 Rottenburg-Dettingen (DE)
(74) Vertreter: Wunderlich, Rainer, Dipl.-Ing.

(57) **Zusammenfassung**

Die Erfindung betrifft eine Spannvorrichtung und ein Verfahren zum Haltern und Spannen eines in einer Längsrichtung langgestreckten Werkstücks (10), mit einem Spanntisch in einer Bearbeitungsvorrichtung. Diese umfaßt eine Sägeeinrichtung (9) mit einem Sägeblatt (7), welches zum Durchsägen des Werkstücks in einer Querrichtung zur Längsrichtung und zur Einstellung der Querrichtung verschwenkbar ausgebildet ist. Ein Spannstück (4) ist zum Haltern und Spannen des Werkstücks (10) in einer Querrichtung zur Längsrichtung verstellbar ausgebildet. Zusätzlich ist das Spannstück in Längsrichtung horzizontal verstellbar ausgebildet. Das Spannstück wird durch eine Verstelleinrichtung in Abhängigkeit von einem Schnittwinkel und von einer Breite des Werkstücks mit ihrem einen Ende bis in die unmittelbare Nähe des Werkzeuges bzw. des Sägeblatts der Sägeeinrichtung verstellt.

## Beschreibung

Die Erfindung betrifft eine Spannvorrichtung zum Haltern und Spannen eines Werkstücke gemäß dem Oberbegriff des Anspruchs 1 sowie ein Verfahren zum Spannen gemäß dem Oberbegriff des Anspruchs 12.

Bei vielen industriellen Produktionsprozessen werden die herzustellenden Produkte aus vorproduzierten Werkstücken oder Halbzeugen endgefertigt.
Oft werden die Halbzeuge in Massenproduktionsprozessen als Stangen- oder Rollenware bereitgestellt. Zur Verwendung der Halbzeuge müssen diese dann entsprechend der vorgegebenen Dimensionierung durch Zerschneiden oder Zersägen abgelängt werden.

Bei der Zusammensetzung von Produkten aus Profilleisten werden die vorgefertigten Profilleisten einer Rolle oder einem Stangenelement entnommen und in Gänze einer Sägevorrichtung zugeführt. Beim Zersägen des vorgefertigten Profils wird auch gleichzeitig die entsprechende Gehrung angebracht, d.h. also ein Schnitt unter einem von 90° gegenüber der Profillängsrichtung abweichenden Winkel.

Um z.B. bei der Produktion von Tür- oder Fensterrahmen oder dergleichen im Maschinenpark eine besonders hohe Produktivität zu erzielen, ist es wesentlich, die entsprechenden Taktzeiten der Maschinen zu verringern.

Dies kann zum einen dadurch erreicht werden, daß der Vorrat an Halbzeugen, z.B. unzerteilte Profilstangen, der Sägevorrichtung mit besonders hoher Geschwindigkeit zugeführt werden. Andererseits können auch entsprechende Sägeeinheiten mit besonders hoher Tourenzahl verwendet werden, so daß die Geschwindigkeit des Durchtrennens des Halbzeugs erhöht wird.

Bekannte Sägevorrichtungen zum Ablängen von Stangenprofilen bestehen in ihrem wesentlichen Element aus einem Spanntisch, auf welchem das abzulängende Werkstück mittels eines Spannstücks gegen eine Anlageeinrichtung mit Anlagekante eingespannt wird. Nach dem Zubringen des zu zersägenden Werkstückes und dem entsprechenden Einspannen und Haltern auf dem Spanntisch wird dann eine Sägeeinrichtung an entsprechender Stelle zum Zerteilen des Werkstücks angesetzt, wobei die Sägevorrichtung gemäß der gewünschten Gehrung verschwenkt wird.

Da bei einem derartigen Sägevorgang das Sägeblatt der Sägeeinrichtung in einer Querrichtung zur Werkstücklängsrichtung durch das Werkstück hindurchgetrieben wird, treten bei dem Sägevorgang mechanische Kräfte auf, welche ebenfalls quer zu der das Werkstück einspannenden Kraft verlaufen. Aufgrund der elastischen Eigenschaften des Materials des zu zerteilenden Werkstückes ergeben sich aufgrund dieser Querkräfte Bewegungen und mechanische Deformationen des Werkstücks im Bereich des Schnittes. Das führt dazu, daß das Schnittergebnis Toleranzen aufweist, welche insbesondere im Hinblick auf das Endprodukt nicht geduldet werden können.

Der Erfindung liegt die **Aufgabe** zugrunde, eine Spannvorrichtung und ein entsprechendes Verfahren zu schaffen, mit welchem ein zu bearbeitendes Werkstück in einer Vorrichtung zum Sägen und Ablängen des Werkstücks auf besonders einfache Weise und besonders zuverlässg gehaltert und gespannt werden kann.

Die Aufgabe wird zum einen bei einer gattungsgemäßen Spannvorrichtung erfindungsgemäß durch die kennzeichnenden Merkmale des Anspruches 1 und zum anderen durch ein Verfahren mit den Merkmalen des Anspruchs 12 gelöst.

Vorteilhafte Weiterbildungen der Erfindung sind Gegenstand der abhängigen Ansprüche.

Es ist ein Kerngedanke der vorliegenden Erfindung, das Spannstück der Spannvorrichtung in Längsrichtung des Werkstücks horizontal verstellbar auszubilden. Ferner ist erfindungsgemäß eine Verstelleinrichtung zum Verstellen des Spannstücks in Längsrichtung des Werkstücks vorgesehen.

Ein weiterer Kerngedanke der vorliegenden Erfindung besteht darin, daß das Spannstück durch die Verstelleinrichtung in Abhängigkeit von einem Schnittwinkel und von einer Breite des Werkstücks mit einem Ende bis in die unmittelbare Nähe des Sägeblatts der Sägeeinrichtung verstellbar ist. Neben einer sägenden Bearbeitung kann die Erfindung selbstverständlich auch bei einem anderen Trennverfahren oder Bearbeitungsmethode eingesetzt werden.

Die Grundidee der vorliegenden Erfindung manifestiert sich also darin, daß das Spannstück, durch welches das abzulängende Werkstück auf dem Spanntisch eingespannt wird, nicht nur horizontal in einer Querrichtung zur Werkstücklängsrichtung verstellbar ausgebildet ist, was zwingend notwendig ist, um überhaupt einen spannenden Druck oder eine spannende Kraft auf das Werkstück auszuüben.

Vielmehr besteht ein Kerngedanke der Erfindung darin, das Spannstück zusätzlich auch in Längsrichtung des Werkstücks horizontal verstellbar auszubilden, um dann das Spannstück mit einem Ende, insbesondere also einem äußeren Ende, in Abhängigkeit vom Schnittwinkel, welcher durch die Längsausdehnung des entsprechenden Sägeblatts in Relation zur Längsrichtung des Werkstücks definiert wird, und von der Werkstückdimensionierung, insbesondere also von der Werkstückbreite, über eine Verstelleinrichtung möglichst dicht an die Schnittebene oder an die Schnittposition des Sägeblatts auf dem Werkstück heranzuführen, um dann das Werkstück gerade in unmittelbarer Nähe der Schnittebene festzuspannen und somit eine Bewegung des Werkstücks, welche Ursache für die Schneidtoleranzen ist, beim eigentlichen Vorgang des Sägens oder Ablängens zu verhindern.

Durch das unterstützende Festhalten des Werkstücks unmittelbar in der Nähe des Angriffspunktes der Säge wird also ein Schwingen und Verschieben des zu zersägenden Werkstückes während des Sägevorgangs verhindert. Der Schnitt kann somit mit geringerer Toleranz und sauber ausgeführt werden.

In einem bevorzugten Ausführungsbeispiel der erfindungsgemäßen Spannvorrichtung ist es vorgesehen, daß die Anlageeinrichtung mit einer langgestreckten und im wesentlichen linearen Anlagekante ausgebildet ist, wobei die Anlageeinrichtung auf dem Spanntisch selbst angeordnet ist und wobei das Spannstück zum Haltern und Spannen eines zu sägenden Werkstücks gegen die Anlagekante der Anlageeinrichtung ausgebildet ist.

Das heißt also, daß beim Einführen des abzulängenden Werkstücks dieses entlang der Anlagekante der Anlageeinrichtung und parallel zu dieser ausgerichtet wird und daß dann das Spannstück quer zur Längsrichtung der Anlagekante und somit auch quer zur Werkstücklängsrichtung an die Anlagekante herangeführt wird, wobei das Werkstück, welches zersägt werden soll, zwischen Spannstück und Anlagekante der Anlageeinrichtung eingeklemmt und somit gehaltert und gespannt wird.

In einem bevorzugten Ausführungsbeispiel der erfindungsgemäßen Spannvorrichtung ist das Spannstück als Spannbacke mit einer etwa in Längsrichtung des Werkstücks oder parallel zur Anlagekante ausgedehnten Spannkante ausgebildet. Dadurch wird ein besonders inniger Kontakt entlang der Längsrichtung des Werkstücks erreicht. Dies wird noch dadurch verstärkt, daß die Spannkante des Spannstücks linear ausgedehnt ist und gegebenenfalls Ausnehmungen und/oder Vorsprünge aufweist, die an der Spannposition der Spannkante beim Spannvorgang mit entsprechenden Vorsprüngen und/oder Ausnehmungen des abzulängenden Werkstücks in etwa formschlüssig kooperieren.

Um ein besonders nahes Heranführen des Spannstücks an die Schneidposition des Sägeblatts auf dem abzulängenden Werkstücks zu ermöglichen, ist es erfindungsgemäß vorgesehen, daß das Spannstück, von der Spannkante ausgehend, in dem von der Anlagekante des Anlagebereichs abgewandten Bereich in Querrichtung zur Werkstücklängsrichtung verjüngend ausgebildet ist.
Durch diese Maßnahme ergibt sich, daß die Spannkante des Spannstücks den in Längsrichtung des Werkstücks breitesten Bereich des Spannstücks definiert. Die Rückseite des Spannstücks - vom Werkstück aus gesehen - verjüngt sich derart, so daß sich zwischen der Seitenkante des Spannstücks und der Längsrichtung des Werkstücks ein möglichst spitzer Winkel ausbildet. Aufgrund dieses Winkels kann dann das äußere Ende des Spannstücks und somit der Spannkante besonders dicht an den Schnitt am Werkstück herangefahren werden, ohne daß es zur Kollision zwischen Spannstück und dem für einen Gehrungsschnitt verschwenkten Sägeblatt der Sägeeinrichtung kommt. Es kann somit auch ein Gehrungsschnitt unter einem zur Werkstücklängsrichtung spitzen Winkel ausgeführt werden, ohne daß das Spannstück vom Sägeblatt beschädigt wird.

In einem weiteren Ausführungsbeispiel der erfindungsgemässen Spannvorrichtung ist für die Verstelleinrichtung für die Längsverstellung eine gesteuert betätigbare Bewegungseinrichtung vorgesehen.

Obwohl prinzipiell auch eine manuelle Verstellung und Einstellung der Spannvorrichtung im Hinblick auf die in Werkstücklängsrichtun auszuführenden Parallelverschiebung- und Verstellung denkbar ist, ist gerade zur Minimierung der Taktzeiten diese gesteuert betätigbare Bewegungseinrichtung vorteilhaft.

Bei der konkreten Realisierung der Bewegungseinrichtung für die Längsverstellung der Spanneinrichtung ist die Ausbildung als Schrittmotor oder in Form eines Spindelantriebs oder dergleichen denkbar.

Besonders flexibel gestaltet sich der Prozeß des Verstellens der Spannvorrichtung und insbesondere des Spannstücks dadurch, daß ein in Längsrichtung des Werkstücks verfahrbarer Schlitten vorgesehen ist, auf welchem zumindest das Spannstück selbst angeordnet ist. Ferner ist es vorgesehen, daß durch die Verstelleinrichtung im Hinblick auf die Längsverstellung der Schlitten in Längsrichtung des Werkstücks bewegbar oder verstellbar ist.
Durch die Anordnung zumindest des Spannstücks auf dem Schlitten ergibt sich ein besonders hohes Maß an Reproduzierbarkeit beim Bewegen und Verstellen, weil derartige Schlitten in der Regel in einem Gleitmechanismus, z.B. in einer Schiene, geführt und gelagert sind.

Zur weiteren Verbesserung im Hinblick auf die Verkürzung der Taktzeiten einer derartigen Sägevorrichtung ist bei der erfindungsgemäßen Spannvorrichtung eine Steuereinrichtung vorgesehen, durch welche zumindest die Verstellung des Spannstücks in Längsrichtung und gegebenenfalls auch in Querrichtung relativ zum Werkstück in Abhängigkeit vom Schnittwinkel des Sägeblatts und von der Dimensionierung, insbesondere der Breite, des Werkstücks steuerbar ist.

Eine derartige Steuereinrichtung bietet sich insbesondere im Rahmen der Prozeßautomatisierung an. Erst der Schritt der Automatisierung mittels der automatischen Steuerung liefert die zur Massenproduktion erforderliche Genauigkeit und Reproduzierbarkeit.

Für diese Automatisierung ist es erfindungsgemäß weiterhin zweckmäßig, mindestens eine Sensoreinrichtung auszubilden, durch welche Positionssignale zumindest des Spannstücks und des Sägeblatts erzeugbar und an die Steuereinrichtung übertragbar sind.
Die vorgesehenen Sensoren messen den Schnittwinkel und die laufende Position der Spannkante des Spannstücks auf dem Spanntisch. Die Steuereinrichtung wertet die Positionssignale aus und steuert die Bewegung des Spannstücks im Hinblick auf die Positionierung in unmittelbarer Nähe zum Schnitt. Durch diese Maßnahmen kann eine besonders schnelle und exakte Annäherung an den Schnitt auf dem Werkstück erreicht werden.

Bei einer Vielzahl vorgefertigter Profile, welche zur Herstellung des Endprodukts abgelängt werden müssen, sind im Profil selbst Abschnitte ausgebildet, die in mechanischer Hinsicht besonders empfindlich sind. Es kann sich dabei um Abschnitte geringerer Materialstärke handeln. Insbesondere kann es sich aber auch um bereits in das Profil eingebrachte zusätzliche Elemente handeln, z.B. in Form von Dichtungen oder dergleichen.

Beim Zersägen derartig kombinierter Profile tritt aufgrund der sehr unterschiedlichen mechanischen Eigenschaften das Problem auf, daß die Bereiche geringerer mechanischer Stabilität eine zusätzliche Fehlerquelle bilden.
Um dem zu begegnen, ist es erfindungsgemäß bei der Spannvorrichtung vorgesehen, daß das Spannstück ein Stützteil aufweist, durch welches ein besonders zu schützender Abschnitt eines zu sägenden Werkstücks beim Haltern und Spannen durch mechanischen Kontakt abstützbar ist.

Es kann dabei z.B. daran gedacht werden, daß am Spannstück ein Vorsprung, z.B. in Form eines Kragens, vorgesehen ist, welcher beim Heranführen des Spannstücks an das Werkstück formschlüssig kooperierend in den entsprechenden und zu schützenden Abschnitten des Werkstücks eingreift, wobei dieser gehalten und abgestützt wird, so daß die benachbart am Schnitt entstehenden mechanischen Kräfte, welche durch das Sägeblatt auf das Werkstück übertragen werden, eine Deformation und insbesondere eine Zerstörung des zu schützenden Abschnitts nicht bewirken können.

Durch diese Maßnahme wird z.B. erreicht, daß in ein Profil bereits eingelassene Gummidichtungen beim Zersägen des Profilhalbzeugs nicht zerrissen werden oder ausfransen.

Nachfolgend wird die Erfindung anhand einer schematischen Zeichnung auf der Grundlage bevorzugter Ausführungsbeispiele der erfindungsgemäßen Spannvorrichtung näher erläutert. In dieser zeigt
- Fig. 1: eine schematische Draufsicht auf ein Ausführungsbeispiel der erfindungsgemäßen Spannvorrichtung, welches in einer Sägevorrichtung angeordnet ist;
- Fig. 2: eine teilweise geschnittene Seitenansicht eines Ausführungsbeispiels einer erfindungsgemäßen Spannvorrichtung und
- Fig. 3: eine teilweise geschnittene Seitenansicht eines weiteren Ausführungsbeispiels der erfindungsgemäßen Spannvorrichtung.

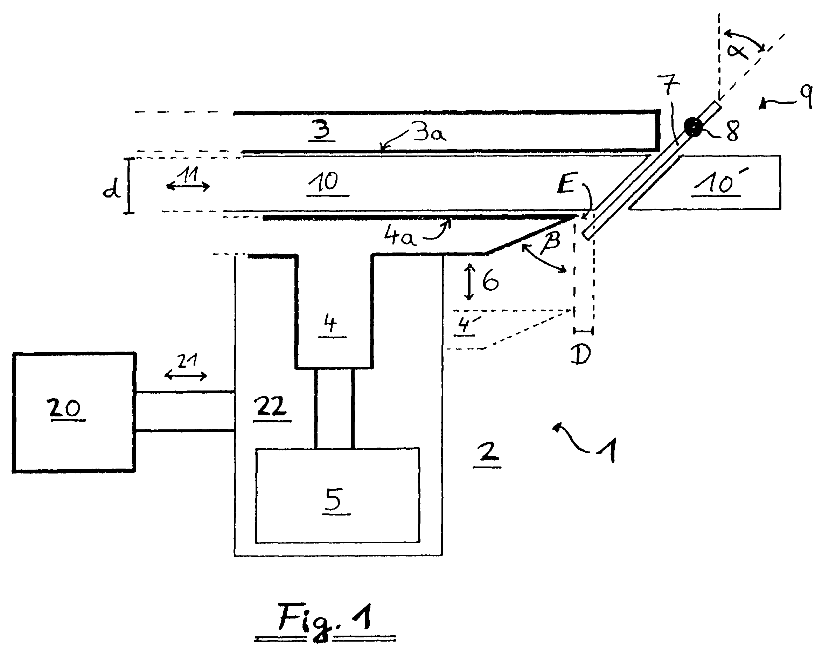

In der Figur 1 ist eine Vorrichtung 1 zum Ablängen und Zersägen von in einer Längsrichtung 11 langgestreckten Werkstücken 10 in schematischer Draufsicht gezeigt.

Das Werkstück 10, dessen Dimensionierung hier durch die Angabe der Werkstückbreite d symbolisiert wird, wird auf dem Spanntisch 2 der Vorrichtung 1 zwischen einem Spannstück 4 mit Spannkante 4a und einer Anlageeinrichtung 3 mit Anlagekante 3a eingespannt. Zum Einspannen wird das Spannstück 4 mittels einer Querbewegungseinrichtung 5 in einer Querrichtung 6 zur Werkstücklängsrichtung 11 bewegt.

Eine Sägeeinrichtung 9 weist ein Sägeblatt 7 auf, welches mittels einer Verschwenkeinrichtung 8 zur Einstellung des Schnitts- oder Gehrungswinkels α verschwenkbar ausgebildet ist.

In der Figur 1 ist der Zustand des Werkstücks 10 nach dem Zersägen oder Ablängen gezeigt. Vom eigentlichen Werkstück 10 ist ein auf der rechten Seite der Figur 1 gezeigtes Ende 10' abgetrennt worden.

Die Längsrichtung 11 des Werkstückes 10, die Anlagekante 3a und die Spannkante 4a des Spannstücks verlaufen in diesem Ausführungsbeispiel der Figur 1 in etwa parallel zueinander.

Das Spannstück 4 ist in diesem Ausführungsbeispiel der Figur 1 mit seiner Querbewegungseinrichtung 5 auf einem Schlitten 22 angeordnet, welcher mittels einer Verstelleinrichtung 20 entlang der Richtung 21, welche in etwa parallel zur Werkstücklängsrichtung 11 ausgebildet ist, bewegt und somit verstellt werden kann.

Durch einen entsprechenden Verstellweg, welcher über die Verstelleinrichtung 20 realisiert wird, wird das äußerste - hier rechte - Ende E des Spannstücks 4 derart in die Nähe der Schnittkante oder Schneidposition des Sägeblatts 7 auf dem Werkstück 10 gebracht, daß der Abstand D zwischen dem äußeren Ende E und der Schnittkante möglichst gering wird. In der Praxis ist hier an einen Abstand von 4 bis 5 mm oder darunter gedacht.

Durch die Ausgestaltung des Spannstücks als sich nach hinten verjüngende Spannbacke mit einem Verjüngungswinkel β ergibt sich, daß als Gehrungswinkel α ein Winkel bis zu Größe β gewählt werden kann, ohne daß es zu einer Beschädigung des Spannstücks 4 durch Kollision mit dem Sägeblatt 7 kommt. Durch eine entsprechende Winkeldimensionierung kann also auch ein besonders breiter Bereich an Gehrungswinkeln beim Zersägen der Werkstücke 10 realisiert werden.

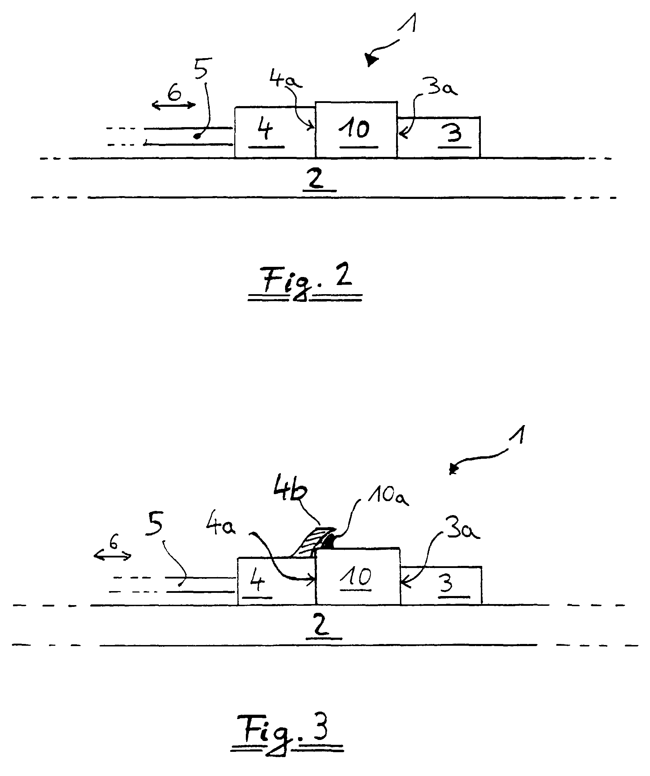

In der Figur 2 ist ein Ausführungsbeispiels der erfindungsgemäßen Spannvorrichtung in teilweise geschnittener Seitenansicht dargestellt.

Auf einem Spanntisch 2 ist die Anlageeinrichtung 3 mit der entsprechenden Anlagekante 3a zu sehen. Mittels einer Querbewegungseinrichtung 5 wurde in dem in Figur 2 gezeigten Zustand das Spannstück 4 mit der Spannkante 4a derart in der Richtung 6 auf das Werkstück 10 und auf die Anlageeinrichtung 3a zu bewegt, daß das Werkstück 10 zwischen der Spannkante 4a und der Anlagekante 3a gehaltert und gespannt wird.

In der Ausführungsform, welche in Figur 3 ebenfalls in teilweise geschnittener Seitenansicht gezeigt ist, weist das Spannstück 4 der erfindungsgemäßen Spannvorrichtung ein zusätzliches Stützteil 4b auf, durch welches ein besonders zu schützender Abschnitt 10a des hier zwischen der Anlageeinrichtung 3 und dem Spannstück 4 eingespannten Werkstücks 10 geschützt wird. Angedeutet ist hier z.B. eine Dichtlippe, welche durch innigen mechanischen und formschlüssigen Kontakt beim Zersägen des Werkstücks 10 derart abgestützt wird, daß sich eine Verletzung, z.B. durch Ausfransen oder Einreißen, der Dichtlippe nicht ergeben kann.

## Patentansprüche

1. Spannvorrichtung zum Haltern und Spannen eines im wesentlichen in einer Längsrichtung (11, 21) langgestreckten Werkstücks (10), mit einem Spanntisch (2) und einem Spannstück (4), welches zum Haltern und Spannen des Werkstücks (10) in einer Querrichtung (6) zur Längsrichtung (11, 21) des Werkstücks (10) verstellbar ausgebildet ist,
dadurch **gekennzeichnet,**
daß das Spannstück (4) in Längsrichtung (11, 21) des Werkstücks (10), vorzugsweise horizontal, verstellbar ausgebildet ist,
daß eine Verstelleinrichtung (20) zum Verstellen des Spannstücks (4) in Längsrichtung (11, 21) des Werkstücks (10) vorgesehen ist und
daß das Spannstück (4) durch die Verstelleinrichtung (20) in Abhängigkeit von einem Bearbeitungs- oder Schnittwinkel (α) eines Werkzeuges oder eines Sägeblattes (7) und von einer Breite (d) des Werkstücks (10) mit ihrem einen Ende (E) bis in die unmittelbare Nähe des Werkzeuges bzw. des Sägeblatts (7) verstellbar ist.

2. Spannvorrichtung nach Anspruch 1,
dadurch **gekennzeichnet,**
daß eine Anlageeinrichtung (3) mit einer langgestreckten, im wesentlichen linearen Anlagekante (3a) vorgesehen ist,
daß die Anlageeinrichtung (3) auf dem Spanntisch (2) angeordnet ist und
daß das Spannstück (4) zum Haltern und Spannen eines zu bearbeitenden Werkstücks (10) gegen die Anlagekante (3a) zu der Anlageeinrichtung (3) ausgebildet ist.

3. Spannvorrichtung nach einem der Ansprüche 1 oder 2,
dadurch **gekennzeichnet,**
daß das Spannstück (4) als Spannbacke mit einer in etwa in Längsrichtung (11, 21) des Werkstücks (10) ausgedehnten Spannkante (4a) ausgebildet ist.

4. Spannvorrichtung nach Anspruch 3,
dadurch **gekennzeichnet,**
daß das Spannstück (4), von der Spannkante (4a) ausgehend, im von der Anlagekante (3a) abgewandten Bereich (4b) in Querrichtung (6) zur Längsrichtung (11, 21) des Werkstücks (10) verjüngend ausgebildet ist.

5. Spannvorrichtung nach einem der vorhergehenden Ansprüche,
dadurch **gekennzeichnet,**
daß die Verstelleinrichtung (20) für die Längsverstellung eine gesteuert betätigbare Bewegungseinrichtung aufweist.

6. Spannvorrichtung nach Anspruch 5,
dadurch **gekennzeichnet,**
daß die Bewegungseinrichtung einen Schrittmotor, einen Spindelantrieb oder dergleichen aufweist.

7. Spannvorrichtung nach einem der vorhergehenden Ansprüche,
dadurch **gekennzeichnet,**
daß ein in Längsrichtung (11, 21) des Werkstücks (10) verfahrbarer Schlitten (22) vorgesehen ist, daß zumindest das Spannstück (4) auf dem Schlitten (22) angeordnet ist und
daß durch die Verstelleinrichtung (20) der Schlitten (22) in Längsrichtung (11, 21) bewegbar oder verstellbar ist.

8. Spannvorrichtung nach einem der vorhergehenden Ansprüche,
dadurch **gekennzeichnet,**
daß eine Steuereinrichtung vorgesehen ist und
daß durch die Steuereinrichtung zumindest die Verstellung des Spannstücks (4) in Längsrichtung (11, 21) und in Querrichtung (6) in Abhängigkeit vom Bearbeitungs- bzw. Schnittwinkel (α) und von der Breite (d) des Werkstücks steuerbar ist.

9. Spannvorrichtung nach Anspruch 8,
dadurch **gekennzeichnet,**
daß Sensoreinrichtungen vorgesehen sind, durch welche Positionssignale zumindest des Spannstücks (4) und des Werkzeuges bzw. des Sägeblatts (7) erzeugbar und an die Steuereinrichtung übertragbar sind.

10. Spannvorrichtung nach einem der vorhergehenden Ansprüche,
dadurch **gekennzeichnet,**
daß das Spannstück (4) ein Stützteil (4b) aufweist, durch welches ein besonders zu schützender Abschnitt (10a) eines zu bearbeitenden Werkstücks (10) beim Haltern und Spannen durch mechanischen Kontakt abstützbar ist.

11. Vorrichtung zum Bearbeiten, insbesondere Sägen, eines im wesentlichen in einer Längsrichtung (11,21) langgestreckten Werkstücks (10) mit einem Werkzeug, insbesondere einer Sägeeinrichtung (9) mit einem Sägeblatt (7), welches zum Bearbeiten bzw. Sägen des Werkstücks (10) in einer Querrichtung zur Längsrichtung (11, 21) des Werkstücks (10) und zur Einstellung eines Bearbeitungs- bzw. Schnittwinkels (α) in Querrichtung verschwenkbar ausgebildet ist,
dadurch **gekennzeichnet,**
daß eine Spannvorrichtung nach einem der Ansprüche 1 bis 10 vorgesehen ist.

12. Verfahren zum Spannen eines im wesentlichen in einer Längsrichtung (11, 21) langgestreckten Werkstücks (10) auf einem Spanntisch (2) einer Bearbeitungsvorrichtung, welches ein Werkzeug, insbesondere ein Sägeblatt (7) einer Sägeeinrichtung (9) umfaßt, wobei das Werkstück (10) durch ein verstellbares Spannstück (4) in einer Querrichtung (6) zur Längsrichtung (11, 21), des Werkstücks (10) gespannt wird,
dadurch **gekennzeichnet,**
daß das Spannstück (4) beim Spannen zusätzlich in Längsrichtung (11, 21) verstellt werden kann und
daß das Verstellen des Spannstücks (4) in Längsrichtung (11, 21) in Abhängigkeit von einem Bearbeitungs- oder Schnittwinkel (α) des Werkzeuges bzw. des Sägeblattes (7) und von der Breite (d) des Werkstücks (10) gesteuert wird.
